# EUROPEAN PATENT SPECIFICATION

(11) **EP 3 842 349 B1**
(45) Date of publication and mention of the grant of the patent: **15.06.2022**
(21) Application number: 20176743.1
(22) Date of filing: 27.05.2020
(51) Int. Cl.: B65B 1/46, B65B 61/28, G01G 11/00, G01G 15/00, B07C 5/16, B07C 5/22, B07C 5/32, B07C 5/36

(54) **ALIGNMENT DEVICE HAVING AUTOMATIC WEIGHT SORTING FUNCTION**
AUSRICHTUNGSVORRICHTUNG MIT AUTOMATISCHER GEWICHTSSORTIERFUNKTION
DISPOSITIF D'ALIGNEMENT DOTÉ D'UNE FONCTION DE TRI DE POIDS AUTOMATIQUE

(30) Priority: 26.12.2019 KR 20190174927
(43) Date of publication of application: 30.06.2021
(73) Proprietor: Intechkorea Co., Ltd., Incheon 22827 (KR)
(72) Inventor: CHO, Seung Jin, Incheon 21980 (KR); HAN, Hae Sung, Goyang-si Gyeonggi-do 10469 (KR)
(74) Representative: Romano, Giuseppe

(56) References cited:
- EP-A1- 3 566 953
- KR-B1- 101 507 366
- KR-Y1- 200 464 257
- US-B2- 6 945 008

## Description

### CROSS-REFERENCE TO RELATED APPLICATION

This application claims the benefit of Korean Patent Application No. 10-2019-0174927 filed on 26 December 2019.

### BACKGROUND OF THE INVENTION

### Technical Field

The present invention relates to an alignment device. More particularly, the invention relates to an alignment device configured to align stick packaging products packed in a stick packaging machine, transfer the stick packaging products to a packaging device, and simultaneously check a weight, thus automatically sorting the stick packaging products into a normal product and a defective product.

### Background Art

Favorite food such as coffee or tea, instant food, health supplement food, medicines are packed in a disposable packaging container to be stored and used. For example, in the case of an instant coffee mix, coffee, sugar, and cream are mixed in the form of powder in a sealed pack. Such an instant coffee mix is packaged and marketed in the form of an elongated stick or pouch.

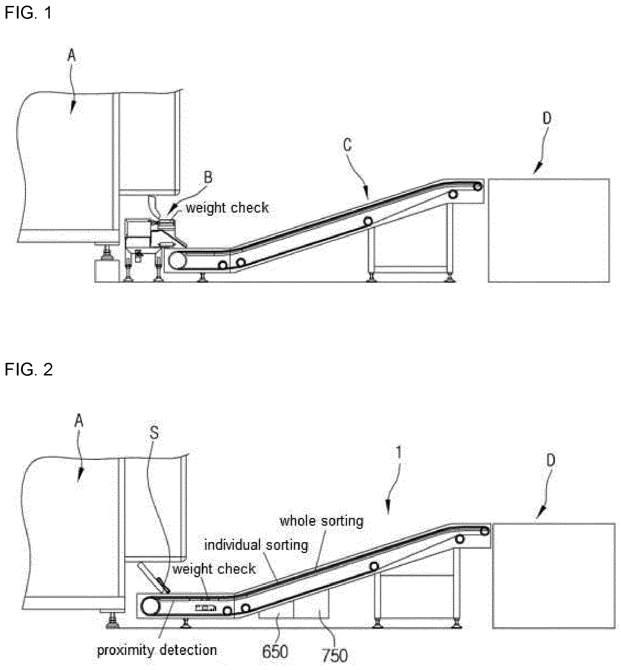

Referring to FIG. 1, generally, a stick packaging machine A seals contents in the form of a stick and packs the contents as a stick packaging product. A weight sorting device B measures the weight of the stick packaging product to sort the product into a normal product and a defective product. An alignment device C transfers the normal product to a packaging device D. The packaging device D contains a plurality of stick packaging products in a container or box to package the products.

Korean Patent No. 10-0972808 (July 29, 2010) has proposed a product transfer device including a transfer rail that guides the transfer of a product, an endless track member that is placed long in a product transfer direction, rotating members supporting both sides of the endless track member, and a transfer member mounted on the endless track member.

However, the above-mentioned conventional device is problematic in that it may merely transfer the product, so that a weight sorting device should be separately purchased and installed, and thereby the cost of purchasing and maintaining the device increases, a predetermined installation space is required, the flow of the stick packaging products may be deteriorated, and the stick packaging products should pass through the weight sorting device, and consequently the stick packaging machine should be installed in a high position or the height of the stick packaging machine should be increased.

Korean U.M Publication No. 20-0464257 (Jan. 09, 2013) has proposed a weight sorting device for a stick packaging product. This device includes a frame, a transfer section having a plurality of chutes bent on lower portions of a plurality of transfer ducts, a plurality of impellers formed on front portions of the chutes and having a plurality of receiving spaces, a plurality of rotary motors connected at rotating shafts thereof to the impellers, respectively, to provide a rotating force, a plurality of weight sensors measuring the weight of products put into the receiving spaces under the rotary motors, respectively, a control part performing a sorting operation on the basis of the weight of the products measured by the weight sensors, and a sorting conveyor rotated according to the sorting result transmitted from the control part to transfer the products.

However, a packaging device packs a set composed of a plurality of stick packaging products as one packaging unit in a container or box. This is problematic in that, when some products in one set are determined as defective products and collected, a worker himself or herself should replenish a shortfall in quantity, thus causing inconvenience. Furthermore, this is problematic in that the normal and defective products sorted on the basis of the measured weight coexist, so that a secondary separating operation is required, and thereby it is difficult to perform the automated packing operation for normal products. As a result, productivity and work efficiency are deteriorated.

EP3566953A1 discloses a multi-row weight sorting apparatus for stick packed products, that may automatically sort normal products and defective products by feeding stick packed products and checking the weights of the stick packed products at the same time. The multi-row weight sorting apparatus includes: a body part; a measurement part; a driving part formed on one side of the body part; a guide part formed on an opposite side of the body part and configured to guide movement of a push part; a push part including a movement bar connected to the movable bundle to move forwards and rearwards and disposed to cross the body part transversely and a plurality of push bars connected to the movement bar to be perpendicular to the movement bar and configured to move forwards and rearwards to push and discharge the stick packed products; a plurality of sorting parts to be inclined, respectively, so as to discharge the stick packed products, and configured to operate cylinder units to discharge the stick packed products after changing the direction of the stick packed products so as to sort normal products and defective products; and a controller configured to receive measurement signals from the measurement units to determine normal products and defective products and to individually control the sorting parts according to a determination result.

The present invention proposes an alignment device having an automatic weight sorting function, which is configured to align stick packaging products packed in a stick packaging machine, transfer the stick packaging products to a packaging device, and simultaneously check a weight, thus automatically sorting the stick packaging products into a normal product and a defective product. This device does not require a separate weight sorting device, so that a stick packaging machine can be installed in a low height, and may individually sort defective products and then entirely sort remaining normal products, thus preventing the normal products and the defective products from coexisting, and may realize an automated packing operation for normal products and the automation of a succeeding line, and may increase productivity and work efficiency.

According to one aspect of the invention, the present invention provides an alignment device including a body section having a plurality of frames; an entry section having entry grooves formed in multiple rows so that stick packaging products discharged from a stick packaging machine enter in a vertical direction, with a detection sensor being installed under each of the entry grooves; a measurement section having a measurement sensor that is installed under a measurement holder to measure the weight of the stick packaging product; a transfer section transferring the stick packaging products along linear alignment grooves that are formed in multiple rows on an upper plate to a packaging device, with alignment holes being formed in the middle of the upper plate in place of the alignment grooves; a drive section having belt members provided on both sides of the body section and driven by a motor, and a plurality of push bars connected between the belt members on both sides to be spaced apart from each other, thus pushing the stick packaging products; an individual sorting section dropping the defective product as a rotary bar is individually rotated downwards by a cylinder unit when it is determined that the product is the defective product; a whole sorting section moving a movable plate that has passing holes to a side by the cylinder unit when it is determined that the product is the defective product, thus dropping remaining normal products; and a control part receiving a measurement signal from the measurement sensor to determine whether the product is the normal product or the defective product, and controlling the cylinder unit according to a determined result, thus sorting the stick packaging products into the normal product and the defective product.

According to the present invention, it is possible to align stick packaging products packed in a stick packaging machine, transfer the stick packaging products to a packaging device, and simultaneously check a weight, thus automatically sorting the stick packaging products into a normal product and a defective product. According to the invention, a separate weight sorting device is not required, so that a stick packaging machine can be installed in a low height, and cost for purchasing and maintaining the device can be reduced. Furthermore, respective rows are individually controlled, thus facilitating independent weight checking and defective-product sorting. It is possible to individually sort defective products and then entirely sort remaining normal products, thus preventing the normal products and the defective products from coexisting, and it is possible to realize an automated packing operation for normal products and the automation of a succeeding line, and to count and pack an exact quantity of products. Therefore, productivity and work efficiency can be increased.

### BRIEF DESCRIPTION OF THE DRAWINGS

FIG. 1 is a schematic view illustrating a conventional system.
FIG. 2 is a schematic view illustrating a system including an alignment device in accordance with the present invention.

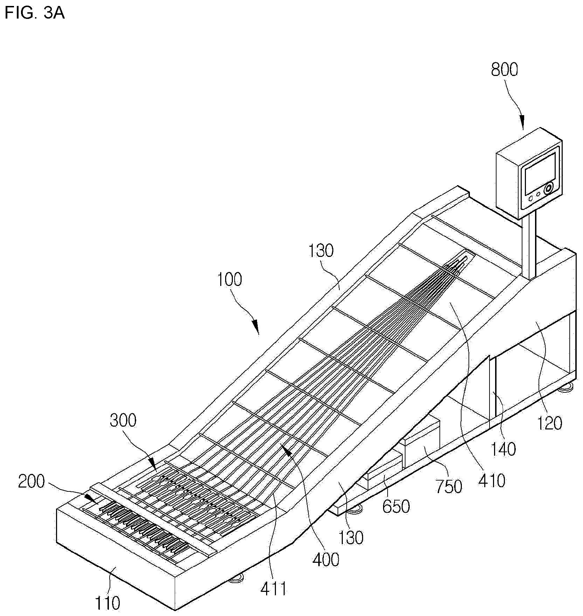

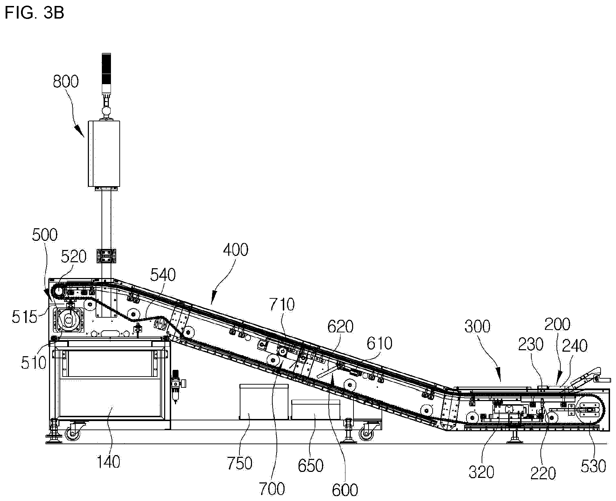

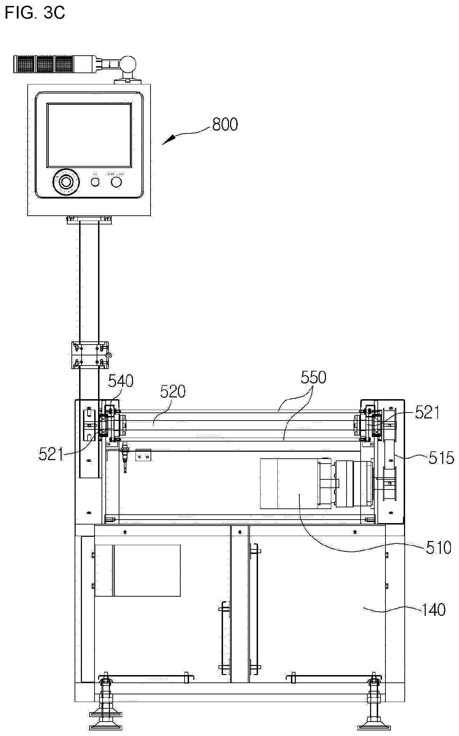

FIG. 3A is a perspective view illustrating the alignment device in accordance with the present invention, FIG. 3B is a side view illustrating the alignment device in accordance with the present invention, and FIG. 3C is a rear view illustrating the alignment device in accordance with the present invention.

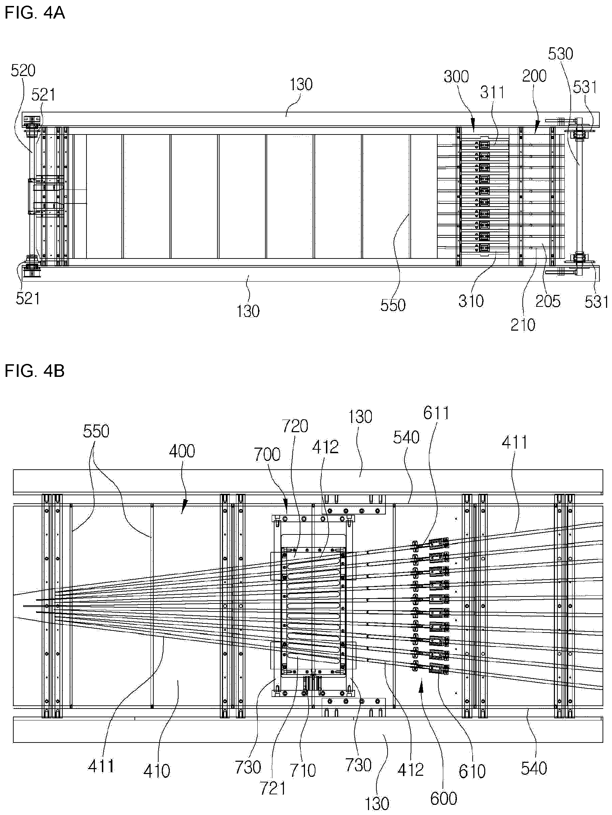

FIG. 4A is a plan view illustrating components other than a transfer section in the alignment device of the present invention, and FIG. 4B is a plan view illustrating a portion of the transfer section of the present invention.

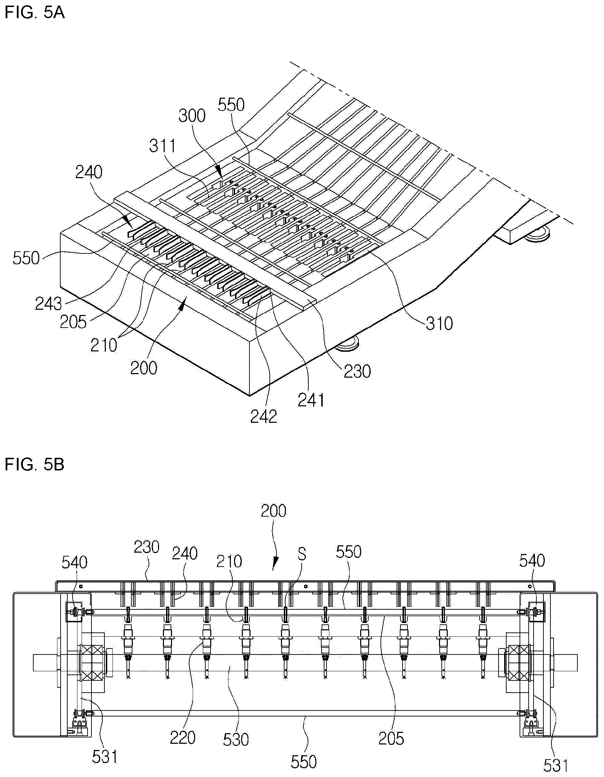

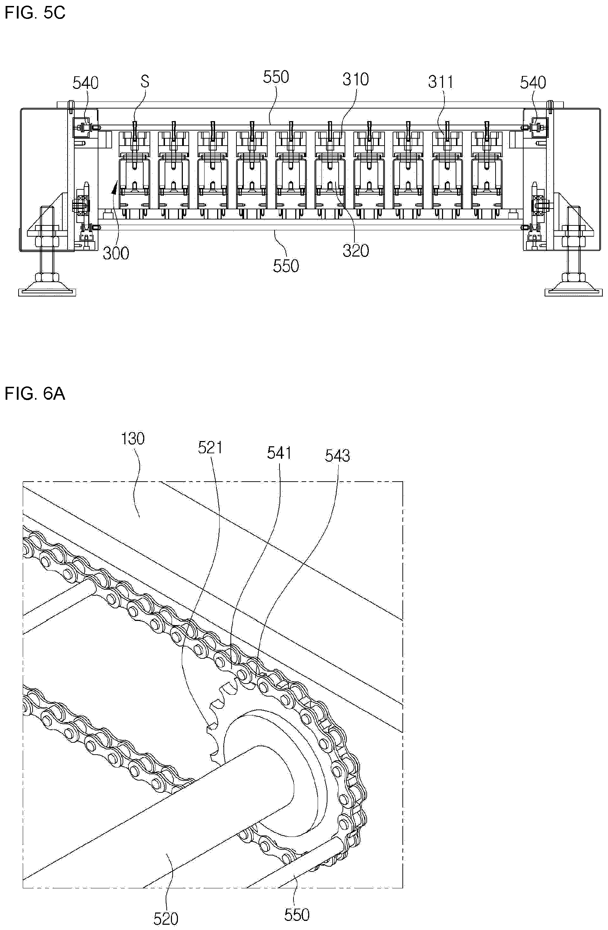

FIG. 5A is a perspective view illustrating an entry section and a measurement section of the present invention, FIG. 5B is a front sectional view illustrating the entry section of the present invention, and FIG. 5C is a front sectional view illustrating the measurement section of the present invention.

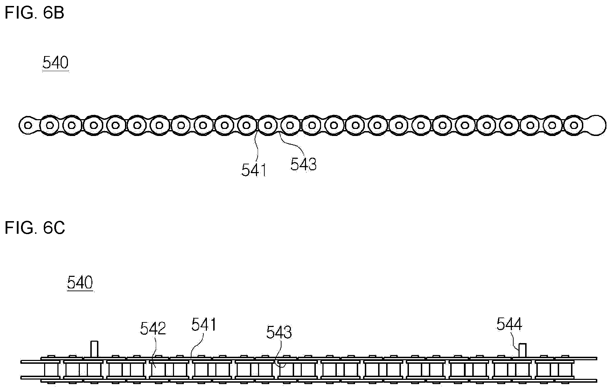

FIG. 6A is a perspective view illustrating a portion of a belt member of a drive section in accordance with the present invention, FIG. 6B is a side view illustrating a portion of the belt member in accordance with the present invention, and FIG. 6C is a plan view illustrating a portion of the belt member in accordance with the present invention.

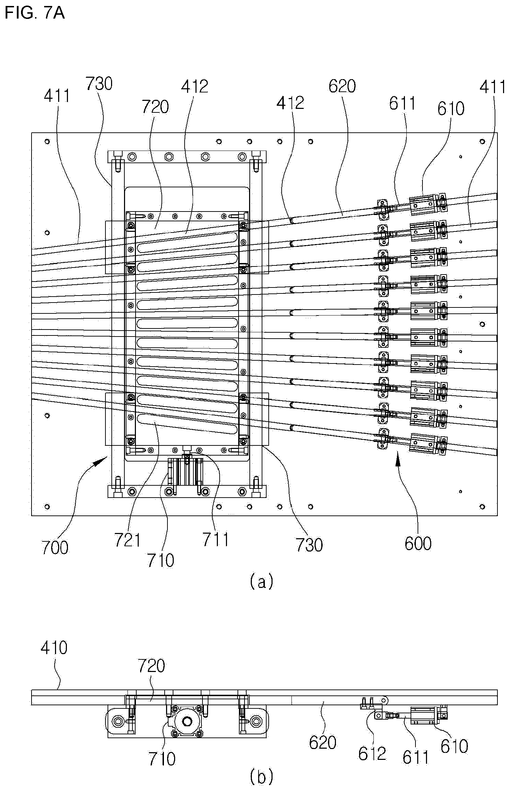

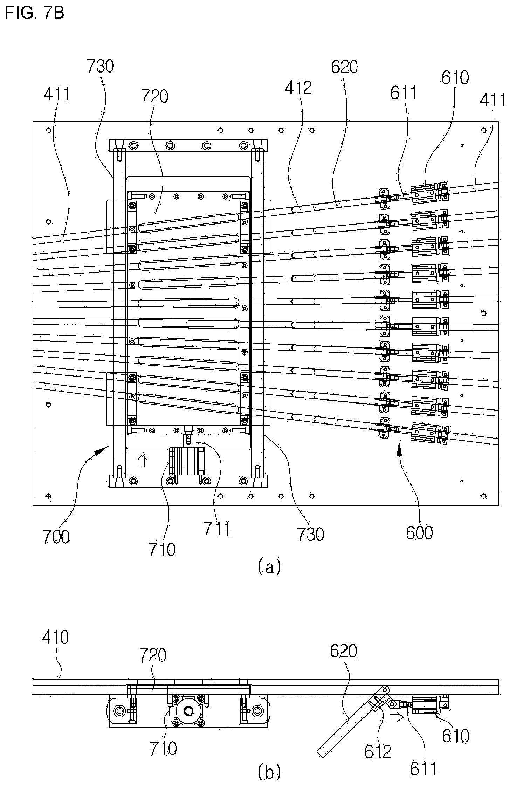

FIG. 7A is a diagram illustrating an embodiment of an operation of an individual sorting section and a whole sorting section when all sets of stick packaging products that enter together are normal products, and FIG. 7B is a diagram illustrating an embodiment of an operation of the individual sorting section and the whole sorting section when the sets include defective products.

### DETAILED DESCRIPTION

Referring to FIGS. 2 to 4B, an alignment device 1 in accordance with the present invention includes a body section 100, an entry section 200, a measurement section 300, a transfer section 400, a drive section 500, an individual sorting section 600, a whole sorting section 700, and a control part 800.

Referring to FIGS. 3A to 3C, the body section 100 is composed of a plurality of frames and a table, and has a front frame 110 and a rear frame 120 on front and rear portions thereof, respectively. The rear frame 120 is positioned higher than the front frame 110, and is supported by a table 140 that is located under the rear frame. Side frames 130 are provided on both sides between the front frame 110 and the rear frame 120 to be inclined upwards towards a rear with a predetermined inclination, thus defining an installation space in which various components may be installed.

Referring to FIGS. 5A and 5B, an entry plate 205 of the entry section 200 is provided between the side frames 130 on a front portion of the body section 100, and entry grooves 210 are formed in multiple rows on the entry plate 205 so that stick packaging products S packed in a stick packaging machine and discharged enter in a vertical direction while standing laterally. The lower parts of the stick packaging products S entering in the vertical direction are inserted into the entry grooves 210 while the upper parts thereof protrude above the entry grooves 210, so that the stick packaging products may be pushed by a push bar 550 passing over the entry grooves 210. A detection sensor 220 is installed under the entry groove 210.

The detection sensor 220 is a high-frequency oscillation-type proximity sensor, and transmits a detection signal to the control part 800 when the approach of the stick packaging product containing metal is detected. The stick packaging product S contains the metal because aluminum is attached to an inner surface of the product. When the stick packaging product S enters a detection range in a high-frequency magnetic field generated in a detection coil, that is, the entry groove 210 formed in the non-metal entry plate 205, an induced current flows an approaching object by electromagnetic induction, thus causing energy loss. When the energy loss occurs, oscillation amplitude generated in the detection coil is reduced or stopped. The detection sensor 220 may determine the presence or absence of magnetic metal of the object using the amount of change in amplitude. Here, the detection range of the detection sensor 220 is preferably from 1 to 10mm.

The detection sensor 220 individually senses the stick packaging products S dropping from the stick packaging machine to transmit the detection signal to the control part 800, and the control part 800 transmits a control signal to the measurement section 300, the drive section 500, the individual sorting section 600, and the whole sorting section 700 to prepare measurement, transfer, and sorting. On the other hand, when some products of a set composed of stick packaging products S discharged simultaneously from the stick packaging machine and entering the entry section 200 do not normally enter the entry grooves 210 while lying down, so that the control part 800 does not receive the detection signal from some of detection sensors 220, a packing quantity is insufficient in a subsequent process and thus it is difficult to pack one set. Hence, after follow-up measures are taken, for example, the drive section 500 stops driving and the stick packaging products S are aligned to enter in a normal posture, the device is re-driven. For instance, when one set contains ten products and some of the stick packaging products S do not normally enter the entry groove 210, the control part 800 stops driving the drive section 500.

A fixing bar 230 is formed to transversely cross a top of the entry section 200. A plurality of entry guides 240 is coupled in pairs to the fixing bar 230, so that the stick packaging product S discharged from the stick packaging machine vertically enters the entry groove 210 between the entry guides while standing laterally, and thus are guided to be pushed and transferred by the push bar 550. If the stick packaging products S are laid laterally, it is impossible to push and transfer the products by the push bar 550. Here, the pair of entry guides 240 includes coupling pieces 241 coupled to the fixing bar 230, support pieces 242 extending forwards from the coupling pieces 241 to allow the stick packaging product S to normally enter and be seated in the entry groove 210, and entry pieces 243 connected to fronts of the support pieces 242 to be open and guiding the vertical entry of the stick packaging product S. Furthermore, the entry guide 240 is formed to be spaced apart from an upper surface of the entry section 200, thus allowing the push bar 550 to smoothly pass through a lower side of the entry guide 240.

Referring to FIGS. 5A and 5C, the measurement section 300 is provided behind the entry section 200, and has a plurality of measurement holders 310 in which measurement grooves 311 are formed. The measurement groove 311 communicates with the entry groove 210, and a measurement sensor 320 is installed under the measurement holder 310 to be connected thereto, so that the weight of the stick packaging product S transferred from the entry section 200 by the push bar 550 and temporally received in the measurement groove 311 is individually measured. The measurement sensor 320 is previously zero-adjusted by a high precision load cell, so that it measures the weight of the stick packaging product S received in the measurement groove 311 and transmits a measured signal to the control part 800. The control part 800 receives the measurement signal from the measurement sensor 320 to determine a normal product and a defective product. According to the determined result, cylinder units 610 and 710 of the individual sorting section 600 and the whole sorting section 700 are controlled to sort the stick packaging products into the normal product and the defective product.

Referring to FIG. 4B, the transfer section 400 is provided behind the measurement section 300, and has an upper plate 410 formed on a top thereof, with linear alignment grooves 411 being formed on the upper plate 410 in multiple rows. The alignment grooves 411 communicate with the measurement grooves 311, and the stick packaging products S are transferred together to the packaging device while being aligned along the linear alignment grooves 411 by the continuous operation of the push bar 550. The upper plate 410 has alignment holes 412 instead of the alignment grooves 411 at positions where the individual sorting section 600 and the whole sorting section 700 are formed, thus allowing the stick packaging products S to be dropped.

The upper plate 410 of the transfer section 400 is formed upwards towards the rear with a predetermined inclination, and the linear alignment grooves 411 formed on the upper plate 410 are arranged to gradually converge on the rear, so that the plurality of stick packaging products S forming one set is discharged to the packaging device while converging on the rear.

Referring to FIGS. 3B to 4B, the drive section 500 includes a motor 510, a driving shaft 520, a driven shaft 530, belt members 540, and a push bar 550 to push and transfer the plurality of stick packaging products S together.

To this end, the motor 510 is connected through the driving belt 515 to one end of the driving shaft 520 in the rear frame 120, thus providing a driving force. Driving gears 521 are formed on both sides of the driving shaft 520, a driven shaft 530 is installed in the front frame 110, driven gears 531 are formed on both sides of the driven shaft, and the belt members 540 are fastened between the driving gears 521 and the driven gears 531 provided on both sides. The belt members 540 are chain belts and installed to drive along both side frames 130. Furthermore, the plurality of push bars 550 is connected between both belt members 540 to be installed at predetermined intervals and disposed across the top of the body section 100. As the belt members 540 are driven and moved by the driving force of the motor 510, the plurality of push bars 550 is also moved. As the push bars 550 move towards the rear, the push bars push the stick packaging products S vertically entering the grooves to transfer the products rearwards. The push bars 550 are moved above the upper plate while being spaced apart therefrom without coming into contact with the upper plate 410.

The motor 510 may be set so that it is not continuously driven but is repeatedly driven and stopped at regular time intervals. For instance, assuming that the alignment device of the present invention is composed of a plurality of sector sections and the motor 510 is set to be repeatedly driven for one second and stopped for one second, the belt member 540 is driven for one second, so that the push bar 550 moves and pushes the stick packaging products S to a next sector. Thereafter, the push bar is stopped for one second and then is driven again for one second, so that the push bar pushes the stick packaging products S to a next sector, and then the push bar is stopped again for one second. These processes are repeated.

Thus, the present invention adopts a method in which the push bar 550 does not drag the plurality of stick packaging products S without continuing to move, but repeats pushing and stopping operations to push the stopped stick packaging products S and thus gradually transfer the products for each sector step by step. Thus, the plurality of stick packaging products S may be smoothly transferred in the vertical direction in a normal posture without being misaligned, and may be periodically stopped, so that the accuracy of the proximity detection of the detection sensor 220 and the weight measurement of the measurement sensor 320 may be increased, and individual sorting and whole sorting may be smoothly realized.

Referring to FIGS. 6A to 6C, the belt member 540 is provided with a plurality of chain units. Each chain unit includes chain pieces 541 provided on both sides thereof, and a pair of chain rollers 542 connected between both the chain pieces 541 to permit a smooth movement. The chain units are connected to each other by coupling pieces 543. Here, the coupling piece 543 is formed inside the chain piece 541 to connect the chain rollers 542 of the neighboring chain units to each other, thus allowing the belt member to be smoothly driven in a linear section as well as a curved section. Fasteners 544 may protrude from some of the chain pieces 541 to fasten the push bar 550 to the belt member 540.

Referring to FIGS. 7A and 7B, the individual sorting section 600 is formed in the middle of the transfer section 400. The alignment holes 412 in place of the alignment grooves 411 are formed through the upper plate 410 in which the individual sorting section 600 is located. A rotary bar 620 controlled individually is installed under each alignment hole 412. Each rotary bar 620 is rotatably coupled to a rod 611 of the cylinder unit 610. Thus, as the rod 611 is drawn in and out, the rotary bar is rotated to perform a lifting operation. At this time, a connecting piece 612 is connected to the rotary bar 620 while being rotatably coupled to a front end of the rod 611, and the rotary bar 620 is rotatably installed by a hinge shaft 621. Thus, if the rod 611 is drawn out by the operation of the cylinder unit 610, the rotary bar 620 maintains level. If the rod 611 is drawn in, the rotary bar 620 is rotated downwards.

Therefore, when the control part 800 determines that the stick packaging product S passing through a corresponding line is a normal product, the rotary bar 620 maintains level, so that the normal product passes over the rotary bar. On the other hand, when the control part 800 determines that the stick packaging product S is a defective product, the control part 800 controls that the rod 611 of the cylinder unit 610 is drawn in. Thus, as the rotary bar 620 rotates downwards and descends, the defective product is dropped and then collected in a defective-product collection box 650 placed thereunder. Subsequently, the rotary bar 620 rotates upwards again to return to its original state.

Referring to FIGS. 7A and 7B, the whole sorting section 700 is formed behind the individual sorting section 600, and the alignment holes 412 in place of the alignment grooves 411 are formed through the upper plate 410 in which the whole sorting section 700 is located. A movable plate 720 is transversely installed under the upper plate 410 in which the alignment holes 412 are formed, a plurality of passing holes 721 is formed in the movable plate 720 to be spaced apart from each other, and the cylinder unit 710 is installed on a side of the movable plate 720. As the rod 711 of the cylinder unit 710 is connected to the movable plate 720 and the rod 711 advances or retreats, the movable plate 720 slightly moves to both sides. Furthermore, the linear guides 730 are installed in front and rear portions of the movable plate 720, respectively, thus supporting and guiding the horizontal movement of the movable plate 720.

When the rod 711 is retreated by the operation of the cylinder unit 610, the passing holes 721 of the movable plate 720 and the alignment holes 412 located above the passing holes 721 are staggered. When the rod 711 is drawn out and advanced, the movable plate 720 slightly moves, so that the passing holes 721 and the alignment holes 412 located above the passing holes 721 are aligned to communicate with each other.

Therefore, when the control part 800 determines through weight measurement that all the products of the set composed of the stick packaging products S entering the entry section 200 together are normal products, the movable plate 720 maintains its original position without moving, so that the normal products pass over the movable plate. Meanwhile, when it is determined that some products are defective products, the defective products of the corresponding line are collected by the individual sorting section 600. Subsequently, the remaining normal products in the same set are collected as follows. That is, the rod 711 of the cylinder unit 710 is drawn out in response to the control signal of the control part 800 in the following whole sorting section 700, so that the movable plate 720 slightly moves to a side. Thus, the passing holes 721 and the alignment holes 412 located above the passing holes are aligned with each other, so that the normal products passing over the holes are dropped to be collected in a normal-product collection box 750 located at a lower position. Thereafter, the movable plate 720 moves slightly in an opposite direction to return to its original state.

As such, the present invention may individually sort the defective product for one set and then entirely sort the remaining normal products in the set, so that the normal products and the defective products may be prevented from coexisting, and the automated packing operation for the normal products and the automation of the succeeding line are possible, and shortage in quantity of final packaging products may be prevented. Thus, it is possible to count and pack an exact quantity, and productivity and work efficiency are increased. If only the Individual sorting operation is performed but the whole sorting is not performed, a person himself or herself should replenish a shortfall in quantity in a succeeding line because defective products in one set are collected, and then should pack one set as a final packaging product in the packaging device D. Consequently, the automation of the succeeding line is not achieved, and productivity and work efficiency are deteriorated.

Hereinafter, an operation example for implementing an alignment device of the present invention will be described in detail with reference to the accompanying drawings.

When a set composed of the plurality of stick packaging products S is discharged from the stick packaging machine to the entry section 200 of the alignment device 1 and vertically enter the entry groove 210, the detection sensor 220 transmits a detection signal detecting the stick packaging product S to the control part 800, and the control part 800 receives the detection signal of the detection sensor 220. Thus, an actuation signal is immediately sent to the drive section 500, so that the belt members 540 provided on both sides are driven by the driving force of the motor 510, the push bars 550 are also moved rearwards as the belt members 540 are driven, and the stick packaging products S vertically entering the entry grooves 210 are pushed and transferred to the measurement section 300 by the movement of the push bars 550. When some products in the set discharged from the stick packaging machine do not vertically enter while lying down, the control part 800 does not receive the detection signal from some of the detection sensors 220. Thus, a quantity of packages is insufficient, so that it is difficult to pack one set in a subsequent process. Hence, the alignment device is re-driven after the follow-up measures are taken, in other words, the drive section 500 stops driving and then the stick packaging product S entering in an abnormal posture is aligned in a normal posture.

Next, when the stick packaging products S transferred to the measurement section 300 are inserted into the measurement grooves 311 and are stopped for a moment, each measurement sensor 320 measures the weight of the stick packaging product S and transmits the measurement signal to the control part 800. The control part 800 compares the measured value of each received measurement signal with a predetermined reference value range to determine whether the product is the normal product and the defective product. If the measured value is between a lower limit and an upper limit of the reference value, it is determined that the product is the normal product. If the measured value is beyond the upper limit or the lower limit, it is determined that the product is the defective product. A weight value of a container for packaging the stick packaging products may be excluded.

When the weight of the stick packaging products S has been measured, the belt members 540 are driven by driving the motor 510 of the drive section 500, so that the push bars 550 push the stick packaging products S to transfer the products to the transfer section 400. Here, the motor 510 is set to be repeatedly driven and stopped at predetermined time intervals. Thus, as the driving and stopping of the belt members 540 are regularly repeated, the stick packaging products S are transferred by the push bars 550 while being repeatedly moved and stopped.

When the control part 800 determines that all of the stick packaging products S passing through multiple lines are the normal products, as illustrated in FIG. 7A, the rotary bars 620 of the individual sorting section 600 maintain level, so that the normal products pass over the rotary bars. Further, the movable plate 720 of the whole sorting section 700 maintains its original position without moving, so that the normal products pass over the movable plate and are transferred to the packaging device D, and then a quantity is counted and a final packaging operation is performed.

On the other hand, when the control part 800 determines that the stick packaging products S of some lines are the defective products, as illustrated in FIG. 7b, the control part 800 controls the cylinder unit 610 of the individual sorting section 600, so that the rotary bar 620 rotates downwards and the defective products are dropped to be collected in the defective-product collection box 650. Subsequently, the rotary bar 620 rotates upwards again to return to its original state. Thereafter, when the remaining normal products in the same set excluding the defective products pass through the whole sorting section 700, the rod 711 of the cylinder unit 710 is drawn out in response to the control signal of the control part 800 and the movable plate 720 moves slightly to a side. Thus, while the passing holes 721 and the alignment holes 412 located above the passing holes are aligned with each other, the normal products passing over the holes to be collected in the normal-product collection box 750. Thereafter, the movable plate 720 moves slightly in an opposite direction to return to its original state.

## Claims

1. An alignment device (1) having an automatic weight sorting function, the alignment device configured to align stick packaging products (S) packed in a stick packaging machine (A), transfer the stick packaging products to a packaging device (D), and simultaneously check a weight, thus automatically sorting the stick packaging products into a normal product and a defective product, the alignment device comprising:
a body section (100) having a plurality of frames
an entry section (200) provided in a front portion of the body section, and having entry grooves (210) formed in multiple rows so that the stick packaging products discharged from the stick packaging machine enter in a vertical direction while standing laterally, with the lower parts of the stick packaging products inserted into the entry grooves while the upper parts thereof protrude above the entry grooves, with a detection sensor (220) being installed under each of the entry grooves
a measurement section (300) provided behind the entry section, and having a plurality of measurement holders (310) each having a measurement groove, with a measurement sensor (320) being installed under each of the measurement holders to measure the weight of the stick packaging product;
a transfer section (400) provided behind the measurement section, transferring the stick packaging products along linear alignment grooves that are formed in multiple rows on an upper plate to the packaging device, with alignment holes in place of the alignment grooves being formed in the middle of the upper plate;
a drive section (500) having belt members provided on both sides of the body section and driven by a motor, and a plurality of push bars (550) connected between the belt members on both sides to be spaced apart from each other, thus pushing the upper parts of stick packaging products that enter in the vertical direction while moving above the upper plate and passing over the entry grooves;
an individual sorting section (600) having rotary bars formed, respectively, under the alignment holes formed in the middle of the upper plate, the rotary bars being individually rotated and moved up and down by a plurality of cylinder units (610) installed under the upper plate, the individual sorting section dropping the defective product as the rotary bar is rotated and moved downwards by the cylinder units when the control part determines that the product is the defective product;
a whole sorting section (700) having a movable plate that is transversely formed and has a plurality of passing holes formed under the alignment holes formed in multiple rows on the upper plate behind the individual sorting section to be spaced apart from each other, the movable plate being installed under the upper plate and moved leftwards and rightwards by a cylinder unit (710) disposed on a side of the movable plate, and the movable plate being moved by the cylinder unit so that the passing holes and the alignment holes located thereabove are aligned with each other, thus dropping remaining normal products excluding the defective product sorted in the individual sorting section, when the control part determines that the defective product occurs; and
a control part (800) receiving a measurement signal from the measurement sensor to determine whether the product is the normal product or the defective product, and controlling the cylinder units (610 and 710) of the individual sorting section (600) and the whole sorting section (700) according to a determined result, thus sorting the stick packaging products into the normal product and the defective product.

2. The alignment device of claim 1, wherein the detection sensor is a high-frequency oscillation-type proximity sensor, transmits a detection signal to the control part when the stick packaging product containing metal enters the entry groove and an approach is detected, and stops driving the drive section when the control part does not receive the detection signal from the detection sensor.

3. The alignment device of claim 1, wherein a fixing bar (230) is formed to transversely cross a top of the entry section, and a plurality of entry guides (240) is coupled to the fixing bar to guide the stick packaging product discharged from the stick packaging machine, thus allowing the stick packaging product to vertically enter the entry groove between the entry guides while standing laterally, each of the entry guides being formed to be spaced apart from an upper surface of the entry section, thus allowing each of the push bars to pass under the entry guide.

4. The alignment device of claim 1, wherein the transfer section is formed upwards towards a rear with a predetermined inclination, and the alignment grooves are arranged to gradually converge on the rear.

5. The alignment device of claim 1, wherein the drive section sets that the motor is repeatedly driven and stopped at regular intervals, so that, as driving and stopping of the belt members are regularly repeated, the stick packaging products are repeatedly moved and stopped by the push bars.

6. The alignment device of claim 1, wherein, when the control part determines that the defective product passes, the individual sorting section causes the rotary bar to rotate downwards so that the defective product is dropped and collected in a defective-product collection box, and the whole sorting section causes remaining normal products excluding the defective product sorted in the individual sorting section to be dropped and collected in a normal-product collection box.

7. The alignment device of claim 1, wherein the whole sorting section is configured so that, as a rod of the cylinder unit is connected to the movable plate and the rod advances or retreats, the movable plate moves to both sides, and linear guides are installed in front and rear portions of the movable plate, respectively, thus supporting and guiding a horizontal movement of the movable plate, and, when the rod is retreated by an operation of the cylinder unit, the alignment holes located at an upper position and the passing holes located at a lower position are staggered, and, when the rod is drawn out and advanced, the movable plate moves to a side, so that the alignment holes located at the upper position and the passing holes located at the lower position are aligned to communicate with each other.

## Patentansprüche

1. Ausrichtungsvorrichtung (1) mit einer automatischen Gewichtssortierfunktion, wobei die Ausrichtungsvorrichtung dazu ausgestaltet ist, stabförmig zu verpackende Produkte (S), die in einer Stab-Verpackungsmaschine (A) verpackt werden, auszurichten,
die stabförmig zu verpackenden Produkte an eine Verpackungsvorrichtung (D) zu übergeben und
gleichzeitig ein Gewicht zu überprüfen, wodurch die stabförmig zu verpackenden Produkte automatisch in ein normales Produkt und ein defektes Produkt sortiert werden, wobei die Ausrichtungsvorrichtung umfasst:
einen Gehäuseabschnitt (100) mit einer Vielzahl von Rahmen;
einen Eintrittsabschnitt (200), der an einem Frontabschnitt des Gehäuseabschnitts vorgesehen ist und Eintrittsrillen (210), die in mehreren Reihen ausgebildet sind, so dass die stabförmigen zu verpackenden Produkte, die von der Stab-Verpackungsmaschine ausgegeben werden, in einer vertikalen Richtung eintreten, während sie lateral stehen, wobei die unteren Teile der stabförmig zu verpackenden Produkte in die Eintrittsrillen eingeführt werden, während ihre oberen Teile über die Eintrittsrillen hinausragen, mit einem Erkennungssensor (220), welcher unter jeder der Eintrittsrillen installiert ist, hat;
einem Messabschnitt (300), der hinter dem Eintrittsabschnitt vorgesehen ist und eine Vielzahl von Messhaltern (310) hat, die jeweils eine Messrille mit einem Messsensor (320) haben, welche unter jedem der Messhalter installiert sind, um das Gewicht des stabförmig zu verpackenden Produkts zu messen;
einen Übergabeabschnitt (400), der hinter dem Messabschnitt vorgesehen ist und die stabförmig zu verpackenden Produkte entlang linearer Ausrichtungsrillen übergibt, die in mehreren Reihen auf einer oberen Platte der Verpackungsmaschine ausgebildet sind, zu der Verpackungsvorrichtung, wobei Ausrichtungslöcher anstelle der Ausrichtungsrillen in der Mitte der oberen Platte ausgebildet sind;
einen Antriebsabschnitt (500) mit Riemenelementen, die an beiden Seiten des Gehäuseabschnitts vorgesehen sind und durch einen Motor angetrieben werden, und einer Vielzahl von Schubstangen (550), die zwischen den Riemenelementen an beiden Seiten so verbunden sind, dass sie voneinander beabstandet sind, wodurch sie die oberen Teile der stabförmig zu verpackenden Produkte, die in der vertikalen Richtung eintreten, während sie sich über die obere Platte bewegen und über die Eintrittsrillen laufen, schieben;
einen individuellen Sortierabschnitt (600) mit Drehstäben, die jeweils unter den Ausrichtungslöchern, die in der Mitte der oberen Platte ausgebildet sind, ausgebildet sind, wobei die Drehstäbe durch eine Vielzahl von Zylindereinheiten (610), die unter der oberen Platte installiert sind, individuell gedreht und nach oben und unten bewegt werden, wobei der individuelle Sortierabschnitt die defekten Produkte abwirft, während der Drehstab durch die Zylindereinheiten gedreht und nach unten bewegt wird, wenn der Steuerteil feststellt, dass das Produkt das defekte Produkt ist;
einen Gesamtsortierabschnitt (700) mit einer bewegbaren Platte, die in Querrichtung ausgebildet ist und eine Vielzahl von Durchgangslöchern hat, welche unter den Ausrichtungslöchern ausgebildet sind, welche in mehreren Reihen auf der oberen Platte hinter dem individuellen Sortierabschnitt ausgebildet sind, um voneinander beabstandet zu sein, wobei die bewegliche Platte unter der oberen Platte installiert ist und durch eine Zylindereinheit (710), die auf einer Seite der beweglichen Platte angeordnet ist, nach links und nach rechts bewegt wird, und die bewegliche Platte durch die Zylindereinheit bewegt wird, so dass die Durchgangslöcher und die Ausgangslöcher, die darüber angeordnet sind, miteinander ausgerichtet sind, so dass verbleibende normale Produkte abgeworfen werden, mit Ausnahme der fehlerhaften Produkte, die in dem individuellen Sortierabschnitt abgeworfen wurden, wenn der Steuerteil feststellt, dass das fehlerhafte Produkt auftritt, und
einen Steuerteil (800), der ein Messsignal von dem Messsensor empfängt, um festzustellen, ob das Produkt das normale Produkt oder das defekte Produkt ist und die Zylindereinheiten (610 und 710) des individuellen Sortierabschnitts (600) und des Gesamtsortierabschnitts (700) gemäß einem festgestellten Ergebnis steuert, wodurch die stabförmig zu verpackenden Produkte in das normale Produkt und das defekte Produkt sortiert werden.

2. Ausrichtungsvorrichtung nach Anspruch 1, wobei der Erkennungssensor ein Näherungssensor vom Hochfrequenz-Oszillationstyp ist, ein Erkennungssignal an den Steuerteil überträgt, wenn das Metall enthaltende stabförmig zu verpackende Produkt in die Eintrittsrille eintritt und eine Annäherung erfasst wird und das Antreiben des Antriebsabschnitts stoppt, wenn der Steuerteil das Erkennungssignal von dem Erkennungssensor nicht empfängt.

3. Ausrichtungsvorrichtung nach Anspruch 1, wobei ein Fixierstab (230) ausgebildet ist, um eine Oberseite des Eintrittsabschnitts quer zu kreuzen, und eine Vielzahl von Eintrittsführungen (240) mit dem Fixierstab gekoppelt ist, um das stabförmig zu verpackende Produkt, das von der Stab-Verpackungsmaschine abgeworfen wird, zu führen, so dass dem stabförmig zu verpackenden Produkt ermöglicht wird, vertikal in die Eintrittsrille zwischen den Eintrittsführungen einzutreten, während es lateral steht, wobei jede der Eintrittsführungen ausgebildet ist, um von einer oberen Fläche des Eintrittsabschnitts beabstandet zu sein, so dass jede der Schubstangen unter den Eintrittsführungen hindurchtreten kann.

4. Ausrichtungsvorrichtung nach Anspruch 1, wobei der Übergabeabschnitt mit einer vorbestimmten Neigung nach oben zu einer Rückseite hin ausgebildet ist und die Ausrichtungsrillen so angeordnet sind, dass sie an der Rückseite allmählich zusammenlaufen.

5. Ausrichtungsvorrichtung nach Anspruch 1, wobei der Antriebsabschnitt festlegt, dass der Motor in regelmäßigen Abständen wiederholt angetrieben und gestoppt wird, so dass die stabförmig zu verpackenden Produkte wiederholt durch die Schubstangen bewegt und gestoppt werden, während das Antreiben und Stoppen der Riemenelemente regelmäßig wiederholt werden.

6. Ausrichtungsvorrichtung nach Anspruch 1, wobei, wenn der Steuerteil feststellt, dass das fehlerhafte Produkt durchläuft, der individuelle Sortierabschnitt bewirkt, dass der Drehstab nach unten rotiert, so dass das defekte Produkt abgeworfen wird und in einer Sammelbox für defekte Produkte gesammelt wird, und der Gesamtsortierabschnitt bewirkt, dass verbleibende normale Produkte mit Ausnahme der defekten Produkte, die in dem individuellen Sortierabschnitt sortiert wurden, abgeworfen und in einer Sammelbox für normale Produkte gesammelt werden.

7. Ausrichtungsvorrichtung nach Anspruch 1, wobei der Gesamtsortierabschnitt so ausgebildet ist, dass sich die bewegliche Platte zu beiden bewegt, wenn ein Stab der Zylindereinheit mit der beweglichen Platte verbunden ist und der Stab vorrückt oder sich zurückzieht, und lineare Führungen in vorderen oder hinteren Abschnitten der beweglichen Platte installiert sind, wodurch eine horizontale Bewegung der beweglichen Platten unterstützt und geführt wird, und, wenn sich der Stab durch eine Betätigung der Zylindereinheit zurückzieht, die Ausrichtungslöcher, die an einer oberen Position angeordnet sind, und die Durchtrittslöcher, die an einer unteren Position angeordnet sind, versetzt sind, und, wenn der Stab herausgezogen ist und vorrückt, die bewegliche Platte zu einer Seite bewegt, so dass die Ausrichtungslöcher, die an einer oberen Position angeordnet sind, und die Durchgangslöcher, die an der unteren Position angeordnet sind, ausgerichtet sind, um miteinander in Verbindung zu stehen.

## Revendications

1. Dispositif d'alignement (1) ayant une fonction de tri de poids automatique, le dispositif d'alignement étant configuré pour aligner des produits de conditionnement en bâtonnet (S) emballés dans une machine de conditionnement en bâtonnet (A), transférer les produits de conditionnement en bâtonnet à un dispositif de conditionnement (D) et vérifier simultanément un poids, triant ainsi automatiquement les produits de conditionnement en bâtonnet en un produit normal et en un produit défectueux, le dispositif d'alignement comprenant :
une section de corps (100) ayant une pluralité de bâtis ;
une section d'entrée (200) prévue dans une partie avant de la section de corps, et ayant des gorges d'entrée (210) formées sur plusieurs rangées de sorte que les produits de conditionnement en bâtonnet déchargés de la machine de conditionnement en bâtonnet pénètrent dans une direction verticale tout en se tenant latéralement, avec les parties inférieures des produits de conditionnement en bâtonnet insérées dans les gorges d'entrée alors que ses parties supérieures font saillie au-dessus des gorges d'entrée, avec un capteur de détection (220) qui est installé sous chacune des gorges d'entrée ;
une section de mesure (300) prévue derrière la section d'entrée et ayant une pluralité de supports de mesure (310) ayant chacun une gorge de mesure, avec un capteur de mesure (320) qui est installé sous chacun des supports de mesure pour peser le produit de conditionnement en bâtonnet ;
une section de transfert (400) prévue derrière la section de mesure, transférant les produits de conditionnement en bâtonnet le long des gorges d'alignement linéaires qui sont formées sur plusieurs rangées sur une plaque supérieure, au dispositif de conditionnement, avec les trous d'alignement à la place des gorges d'alignement qui sont formés dans le centre de la plaque supérieure ;
une section d'entraînement (500) ayant des éléments de courroie prévus des deux côtés de la section de corps et entraînée par un moteur, et une pluralité de barres de poussée (550) raccordées entre les éléments de courroie sur les deux côtés pour être espacées les unes des autres, poussant ainsi les parties supérieures des produits de conditionnement en bâtonnet qui pénètrent dans la direction verticale tout en se déplaçant au-dessus de la plaque supérieure et en passant sur les gorges d'entrée ;
une section de tri individuelle (600) ayant des barres rotatives formées respectivement sous les trous d'alignement formés au centre de la plaque supérieure, les barres rotatives étant entraînées individuellement en rotation et levées et abaissées par une pluralité d'unités de cylindre (610) installées sous la plaque supérieure, la section de tri individuelle laissant tomber le produit défectueux lorsque la barre rotative tourne et est déplacée vers le bas par les unités de cylindre lorsque la partie de contrôle détermine que le produit est le produit défectueux ;
une section de tri d'ensemble (700) ayant une plaque mobile qui est formée, de manière transversale, et a une pluralité de trous passants formés sous les trous d'alignement formés sur plusieurs rangées sur la plaque supérieure sous la section de tri individuelle pour être espacés les uns des autres, la plaque mobile étant installée sous la plaque supérieure et déplacée vers le gauche et vers la droite par une unité de cylindre (710) disposée sur un côté de la plaque mobile, et la plaque mobile étant déplacée par l'unité de cylindre de sorte que les trous passants et les trous d'alignement situés au-dessus sont alignés les uns par rapport aux autres, laissant ainsi tomber les produits normaux résiduels excluant le produit défectueux triés dans la section de tri individuelle, lorsque la partie de contrôle détermine que le produit défectueux est présent ; et
une partie de contrôle (800) recevant un signal de mesure du capteur de mesure pour déterminer si le produit est le produit normal ou le produit défectueux, et contrôlant les unités de cylindre (610 et 710) de la section de tri individuelle (600) et la section de tri d'ensemble (700) selon un résultat déterminé, triant ainsi les produits de conditionnement en bâtonnet en produit normal et en produit défectueux.

2. Dispositif d'alignement selon la revendication 1, dans lequel le capteur de détection est un capteur de proximité de type à oscillation haute fréquence, transmet un signal de détection à la partie de contrôle lorsque le produit de conditionnement en bâtonnet contenant du métal pénètre dans la gorge d'entrée et qu'une approche est détectée, et arrête d'entraîner la section d'entraînement lorsque la partie de contrôle ne reçoit pas le signal de détection du capteur de détection.

3. Dispositif d'alignement selon la revendication 1, dans lequel une barre de fixation (230) est formée pour traverser, de manière transversale, une partie supérieure de la section d'entrée, et une pluralité de guides d'entrée (240) est couplée à la barre de fixation pour guider le produit de conditionnement en bâtonnet déchargé de la machine de conditionnement en bâtonnet, permettant ainsi au produit de conditionnement en bâtonnet de pénétrer verticalement dans la gorge d'entrée entre les guides d'entrée tout en se tenant latéralement, chacun des guides d'entrée étant formé pour être espacé d'une surface supérieure de la section d'entrée, permettant ainsi à chacune des barres de poussée de passer sous le guide d'entrée.

4. Dispositif d'alignement selon la revendication 1, dans lequel la section de transfert est formée vers le haut vers une partie arrière avec une inclinaison prédéterminée, et les gorges d'alignement sont agencées pour converger progressivement sur la partie arrière.

5. Dispositif d'alignement selon la revendication 1, dans lequel la section d'entraînement détermine que le moteur est entraîné et arrêté à plusieurs reprises à intervalles réguliers, de sorte que lorsque l'entraînement et l'arrêt des éléments de courroie sont répétés régulièrement, les produits de conditionnement en bâtonnet sont déplacés et arrêtés à plusieurs reprises par les barres de poussée.

6. Dispositif d'alignement selon la revendication 1, dans lequel, lorsque la partie de contrôle détermine que le produit défectueux passe, la section de tri individuelle amène la barre rotative à tourner vers le bas de sorte que le produit défectueux tombe et est collecté dans une boîte de collecte de produits défectueux, et la section de tri d'ensemble amène les produits normaux résiduels excluant le produit défectueux trié dans la section de tri individuelle, à tomber et à être collectés dans une boîte de collecte de produits normaux.

7. Dispositif d'alignement selon la revendication 1, dans lequel la section de tri d'ensemble est configurée de sorte que, lorsqu'une tige de l'unité de cylindre est raccordée à la plaque mobile et que la tige avance ou recule, la plaque mobile se déplace vers les deux côtés, et les guides linéaires sont installés dans les parties avant et arrière de la plaque mobile, respectivement, supportant et guidant ainsi un mouvement horizontal de la plaque mobile, et lorsque la tige est reculée par une opération de l'unité de cylindre, les trous d'alignement situés dans une position supérieure et les trous passants situés dans une position inférieure sont en quinconce, et lorsque la tige est retirée et avancée, la plaque mobile se déplace vers un côté, de sorte que les trous d'alignement situés dans la position supérieure et les trous passants situés dans la position inférieure sont alignés pour communiquer entre eux.
